# EUROPEAN PATENT APPLICATION

(11) **EP 4 216 111 A1**
(43) Date of publication of application: **26.07.2023**
(21) Application number: 22206608.6
(22) Date of filing: 10.11.2022
(51) Int. Cl.: G06N 5/045, G06N 5/046

(54) **RISK ANALYSIS PROGRAM, RISK ANALYSIS METHOD, AND INFORMATION PROCESSING DEVICE OF RISK ANALYSIS**

(30) Priority: 25.01.2022 JP 2022009674
(71) Applicant: FUJITSU LIMITED, Kawasaki-shi, Kanagawa 211-8588 (JP)
(72) Inventor: Nitta, Izumi, Kawasaki-shi, Kanagawa (JP); Ohashi, Kyoko, Kawasaki-shi, Kanagawa (JP); Iwakura, Satoko, Kawasaki-shi, Kanagawa (JP); Onodera, Sachiko, Kawasaki-shi, Kanagawa (JP)
(74) Representative: Hoffmann Eitle

(57) **Abstract**

A risk analysis program for an artificial intelligence (AI) system, the risk analysis program being a program including instructions which, when executed by a computer, cause the computer to execute processing, the processing including: acquiring a plurality of pieces of relational information that include at least two attributes among an attribute of a type of an object person, an attribute of a type of processing, and an attribute of a type of data, wherein the relational information is determined on a basis of a configuration of the AI system; determining a priority of the plurality of pieces of relational information on a basis of the attribute of the type of the object person; and outputting one or a plurality of check items selected on a basis of the determined priority from among a plurality of check items associated with each attribute as a checklist for the AI system.

## Description

### FIELD

The embodiments discussed herein are related to a risk analysis program, a risk analysis method, and an information processing device of risk analysis.

### BACKGROUND

In artificial intelligence (AI) systems, ethical risk assessments are sometimes performed.

Use of AI systems for various types of industry and tasks may raise ethical issues. If such an issue occurs, it will have a great impact not only on companies or organizations that provided the AI system, but also on users of the AI system and society beyond.

Therefore, in social implementation of AI, efforts are being made to recognize and deal with ethical risks.

However, since AI systems have multiple stakeholders and social circumstances surrounding the stakeholders change, it may not be easy to detect what ethical issues may arise from the use of AI systems.

Therefore, the very checklists presented by principles and guidelines regarding AI ethics are sometimes applied to the AI systems and their stakeholders and analyzed.

Examples of the principles and guidelines regarding AI ethics include "European High-Level Expert Group on AI (AI HLEG) "Ethics Guidelines for Trustworthy AI"", "Ministry of Internal Affairs and Communications AI Utilization Guidelines", "Integrated Innovation Strategy Promotion Council "Human-centered AI Social Principles"", and "OECD "Recommendation of the Council on Artificial Intelligence"".

Furthermore, "risk chain models (RCModels)" have been proposed as models for AI service providers to consider risk control related to their own AI services in accord with the existence of various forms of AI service provision.

In a risk chain model, risk constituent elements are organized and structured according to (1) to (3) below.
(1) Technical constituent elements of AI system
(2) Constituent elements related to service provider's code of conduct (including communication with users)
(3) Constituent elements related to user understanding, behavior, and usage environment

Furthermore, in the risk chain model, identification of risk scenarios, specification of constituent elements that become risk factors, visualization of risk chains, and examination of risk control are performed. In the visualization of risk chains and the examination of risk control, the AI service providers become able to examine stepwise risk reduction by visualizing relationship (risk chains) of the constituent elements related to the risk scenarios.

Examples of the related art include Takashi Matsumoto and Arisa Ema, "RCModel, a Risk Chain Model for Risk Reduction in AI Services", June 4, 2020, Internet <URL:ifi.u-tokyo.ac.jp/wp/wp-content/uploads/2020/06/policy_recommendation_tg_20200604.pdf>.

### SUMMARY

### TECHNICAL PROBLEM

However, the checklists presented by the principles and guidelines do not specifically indicate what part of the AI system should be, and AI system developers or providers need to materialize the AI system. This materialization work is highly difficult and requires a large amount of man-hours.

Furthermore, although the risk constituent elements are organized in the risk chain models, the AI system providers and developers need to put the risk constituent elements into items to be practiced for AI system components and individual stakeholders.

In one aspect, an object is to support AI system developers and providers in appropriately recognizing and dealing with ethical risks that may arise from operation of AI systems.

### SOLUTION TO PROBLEM

According to an aspect of the embodiments, there is provided a risk analysis program for an artificial intelligence (AI) system, the risk analysis program being a program including instructions which, when executed by a computer, cause the computer to execute processing. In an example, the processing includes: acquiring a plurality of pieces of relational information that include at least two attributes among an attribute of a type of an object person, an attribute of a type of processing, and an attribute of a type of data, wherein the relational information is determined on a basis of a configuration of an artificial intelligence (AI) system; determining a priority of the plurality of pieces of relational information on a basis of the attribute of the type of the object person; and outputting one or a plurality of check items selected on a basis of the determined priority from among a plurality of check items associated with each attribute as a checklist for the AI system.

### ADVANTAGEOUS EFFECTS OF INVENTION

In one aspect, it is possible to support AI system developers and providers in appropriately recognizing and dealing with ethical risks that may arise from operation of AI systems.

### BRIEF DESCRIPTION OF DRAWINGS

FIG. 1 is a table illustrating part of an AI ethics model according to an embodiment;
FIG. 2 is a block diagram illustrating a configuration example of an AI system according to the embodiment;
FIG. 3 is a table illustrating part of an AI ethics checklist according to the embodiment;
FIG. 4 (i.e., FIGs. 4A and 4B) is a table illustrating use cases as input data according to the embodiment;
FIG. 5 is a table illustrating use cases as input data according to the embodiment;
FIG. 6 (i.e., FIGs. 6A to 6C) is a table illustrating use cases as input data according to the embodiment;
FIG. 7 is a block diagram illustrating a system diagram as output data according to the embodiment;
FIG. 8 (i.e., FIGs. 8A and 8B ) is a table illustrating part of an analysis sheet as output data according to the embodiment;
FIG. 9 is a block diagram illustrating an analysis diagram as output data according to the embodiment;
FIG. 10 (i.e., FIGs. 10A and 10B) is a block diagram illustrating a generation example of a graph structure from the analysis sheet according to the embodiment;
FIG. 11 (i.e., FIGs. 11A and 11B) is a block diagram illustrating an extraction example of check items according to the embodiment;
FIG. 12 is a block diagram schematically illustrating a hardware configuration example of an information processing device according to the embodiment;
FIG. 13 is a block diagram schematically illustrating a software configuration example of the information processing device according to the embodiment; and
FIG. 14 is a flowchart for describing AI ethics checklist generation processing according to the embodiment.

### DESCRIPTION OF EMBODIMENTS

### [A] Embodiment

Hereinafter, an embodiment will be described with reference to the drawings. Note that the embodiment to be described below is merely an example, and there is no intention to exclude application of various modifications and techniques not explicitly described in the embodiment. For example, the present embodiment can be variously modified and carried out without departing from the spirit thereof. Furthermore, each drawing is not intended to include only constituent elements illustrated in the drawing and can include another function and the like.

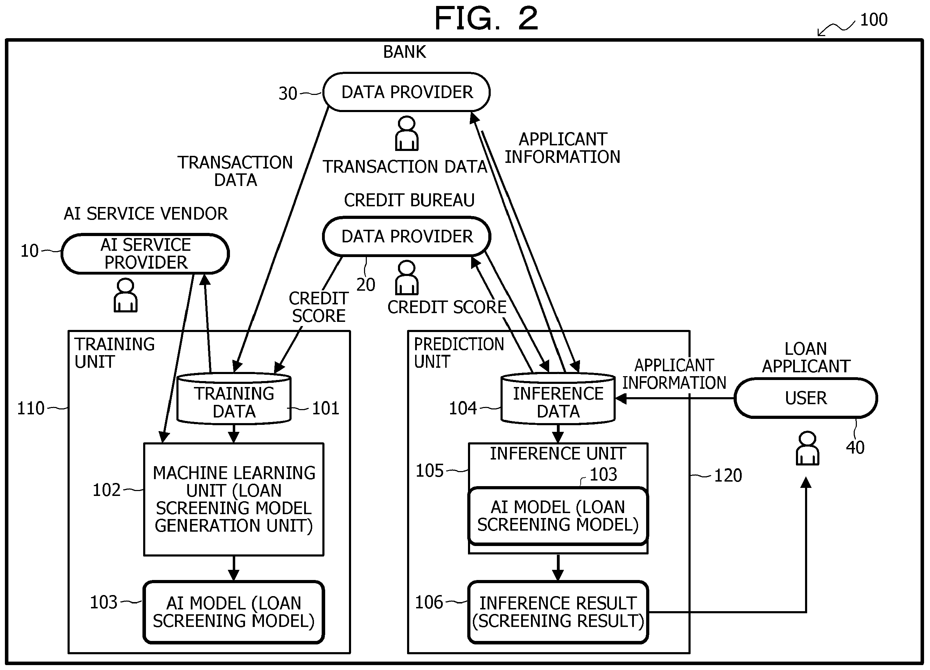

According to the embodiment, ethical characteristics that an AI system 100 (to be described below with reference to FIG. 2) should have are formed into a checklist in association with a relationship between the AI system 100 and stakeholders, and an analysis is conducted using the checklist. Therefore, the need for an AI service provider 10 (to be described below with reference to FIG. 2) and developers to put the ethical characteristics into items to be practiced for components of the AI system 100 and individual stakeholders is eliminated.

Furthermore, the relationship between the constituent elements of the AI system 100 and the stakeholders is formed into a graph structure, and a checklist giving priority to check items on the basis of characteristics of the graph structure is automatically generated. Therefore, important check items are analyzed on a priority basis to improve the efficiency.

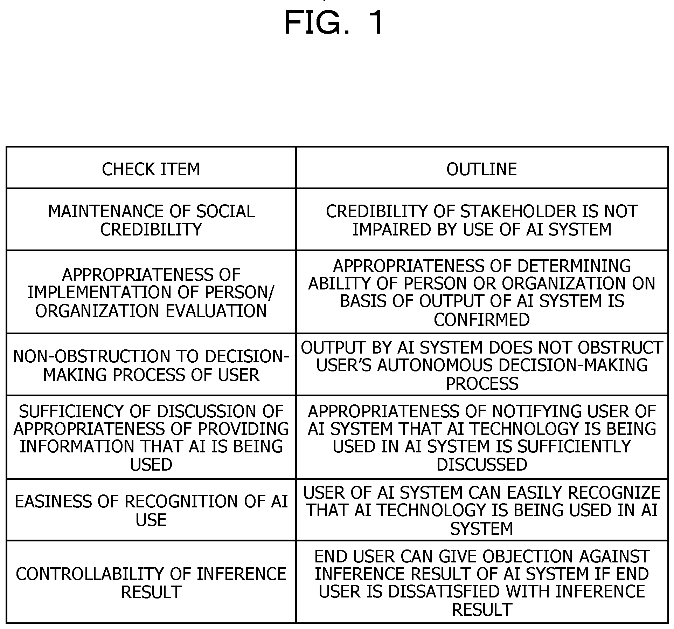

FIG. 1 is a table illustrating part of an AI ethics model according to an embodiment.

The AI ethics model organizes principles, guidelines and the like related to AI ethics, and is configured as a checklist that the AI system 100 should satisfy. Part of the AI ethics model illustrated in FIG. 1 is derived from the "European High-Level Expert Group on AI (AI HLEG) "Ethics Guidelines for Trustworthy AI"".

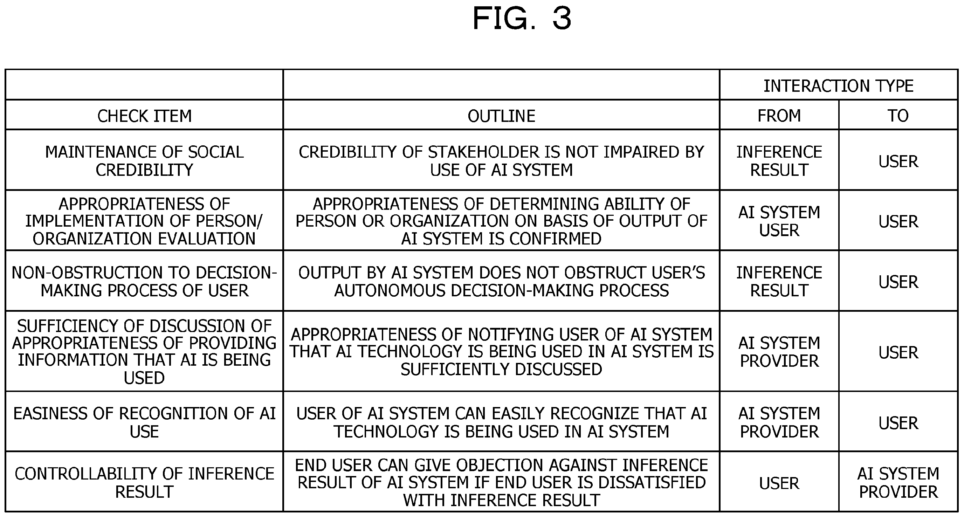

An AI ethics risk checklist (to be described below with reference to FIG. 3) applied to a relationship (interaction) between any two of the components of the AI system 100 and the stakeholders is generated on the basis of the AI ethics model. Then, ethical risk events that occur in the AI system 100 and factors of the ethical risk events are extracted using the AI ethics checklist.

In the part of the AI ethics model illustrated in FIG. 1, the check items and outlines (states that should be satisfied for the AI system 100 to be ethical) are associated and registered. For example, in the check item "maintenance of social credibility", "use of the AI system will not damage credibility of stakeholders" is registered as the outline.

FIG. 2 is a block diagram illustrating a configuration example of the AI system 100 according to the embodiment.

The AI system 100 illustrated in FIG. 2 illustrates interactions of loan screening AI. The arrows in FIG. 2 indicate interactions. Both ends (start point and end point) of an interaction can be elements of any of stakeholders, data, or components of the AI system. A type of the interaction is specified by roles (a data provider 20 or 30, a user 40, training data 101, an AI model 103, or the like) of the elements corresponding to the start point and end point of the interaction.

The AI system 100 is used by an AI service provider 10 such as an AI service vendor, the data provider 20 such as a credit bureau, the data provider 30 such as a bank, and the user 40 such as a loan applicant.

A training unit 110 includes a machine learning unit 102 (loan screening model generation unit) that executes training of the AI model 103 (loan screening model) by machine learning for training data 101. The training data 101 may be generated by an input of a credit score from the data provider 20 and an input of transaction data from the data provider 30.

A prediction unit 120 includes an inference unit 105 that outputs an inference result 106 (screening result) by inferring inference data 104 using the AI model 103. The inference data 104 may be generated by an input and an output of a credit score from the data provider 20, an input and an output of application information and transaction data from the data provider 30, and an input of applicant information from the user 40.

FIG. 3 is a table illustrating part of an AI ethics checklist according to the embodiment.

The AI ethics checklist associates the check item of the AI ethics model illustrated in FIG. 1 with a check item that should be satisfied according to the type of interaction. One check item in the AI ethics checklist corresponds to one type of interaction.

In the part of the AI ethics checklist illustrated in FIG. 3, the check item, the outline, the interaction type (From, To) are associated with one another. For example, the check item "maintenance of social credibility" is registered in association with the outline "use of the AI system will not damage credibility of stakeholders", the interaction type (From) "inference result", and the interaction type (To) "user".

Here, AI ethics risk analysis processing according to the embodiment will be described.

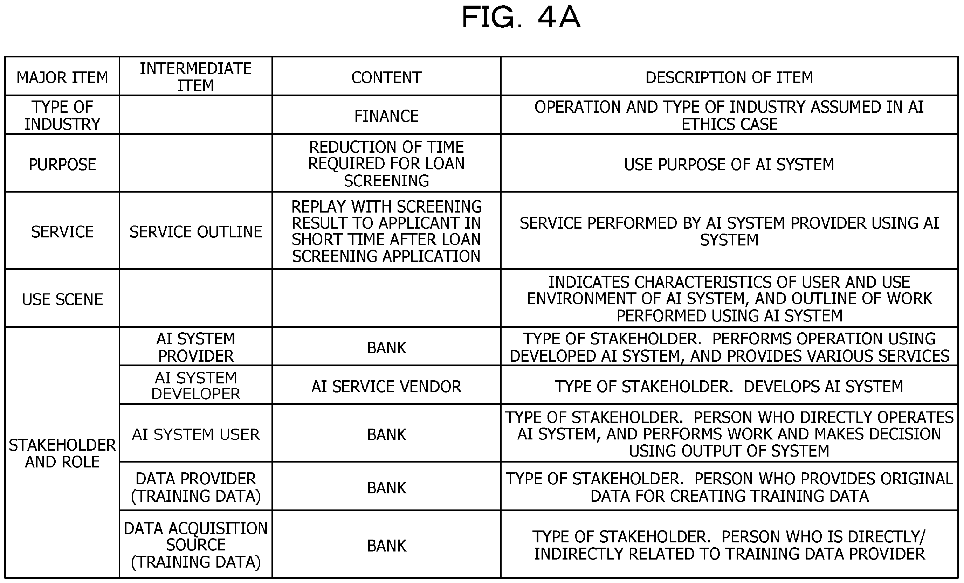

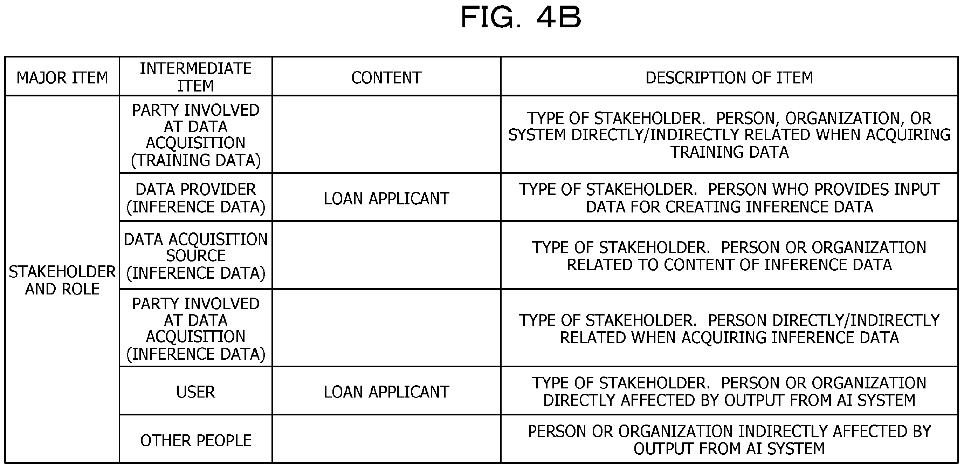

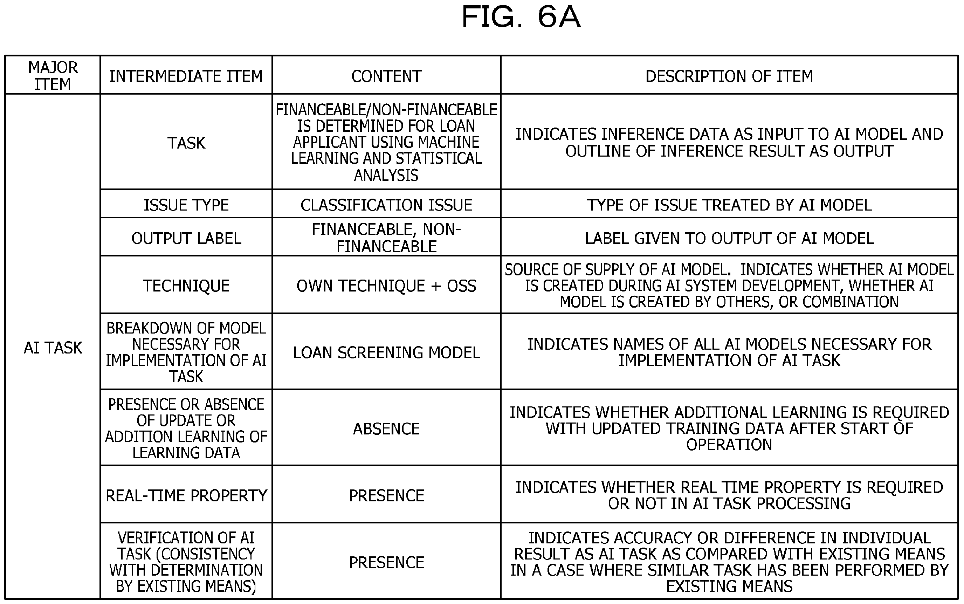

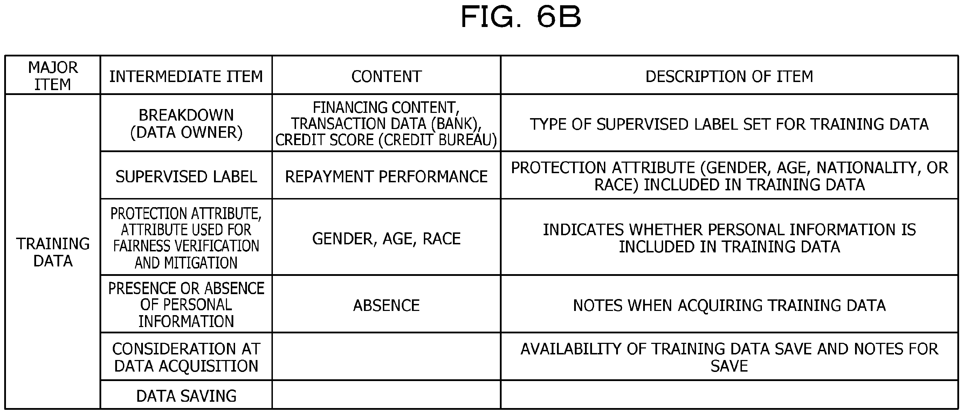

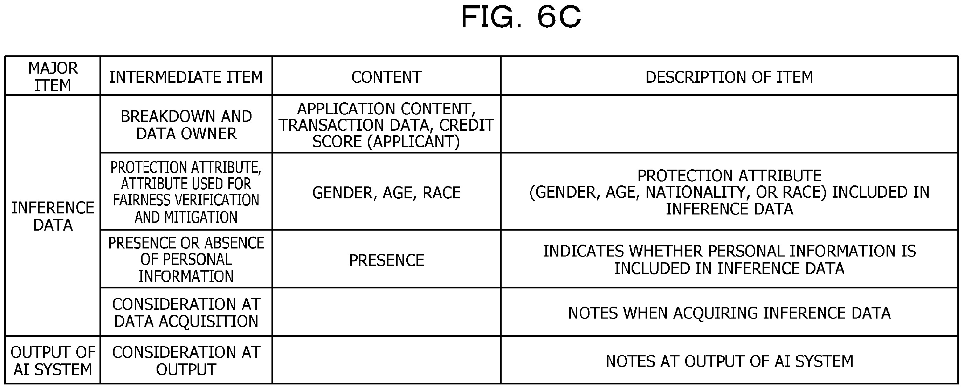

For the AI system 100 to be analyzed, outline sheets (to be described below with reference to FIGs. 4 (i.e., FIGs. 4A and 4B) to 6 (i.e., FIGs. 6A to 6C)) of use cases in which information necessary for analysis are input as input data.

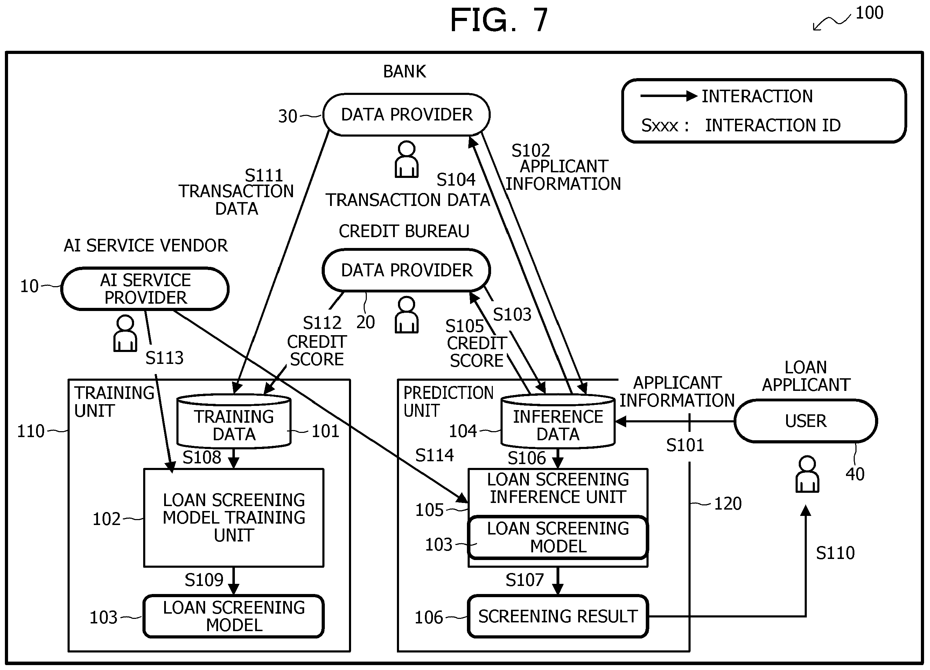

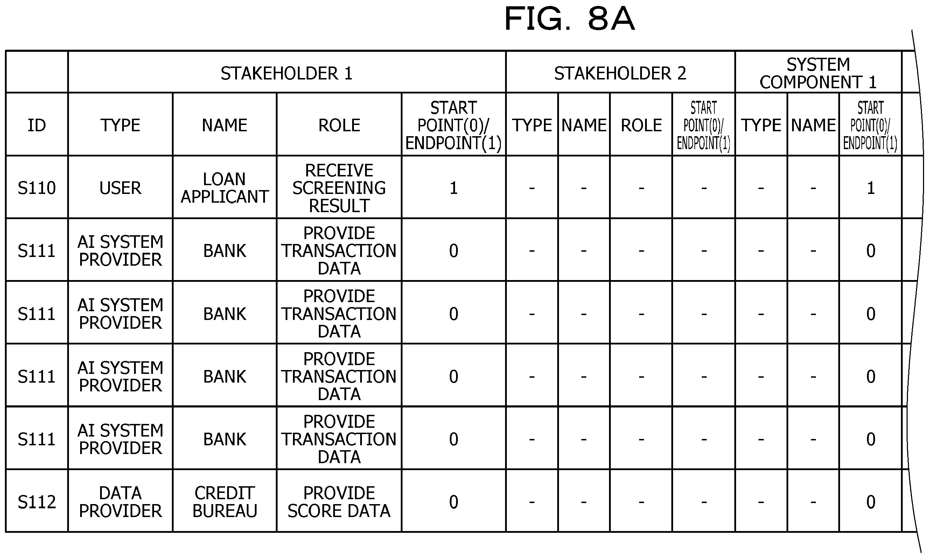

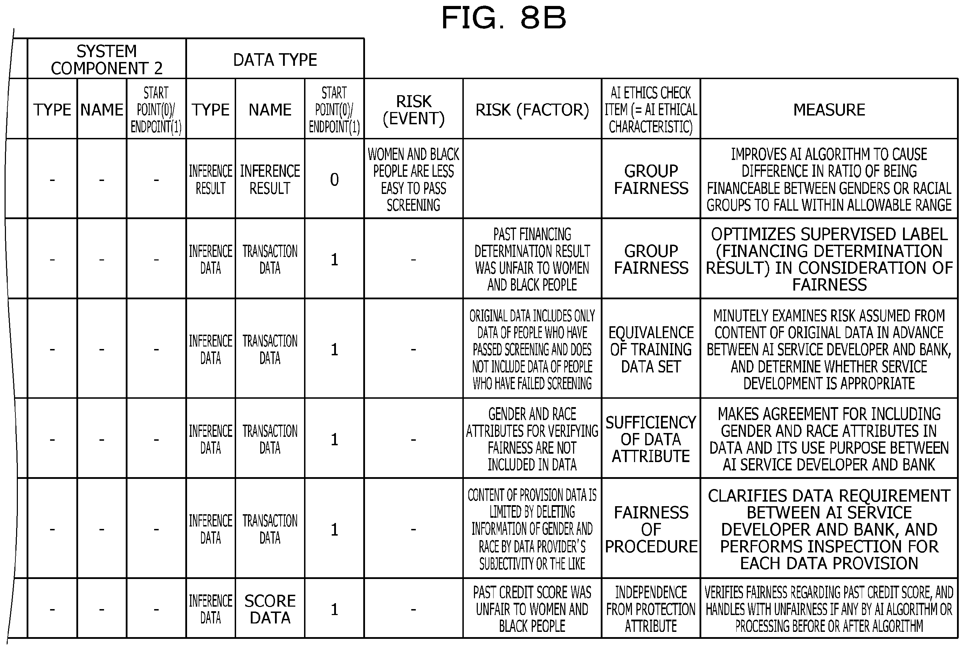

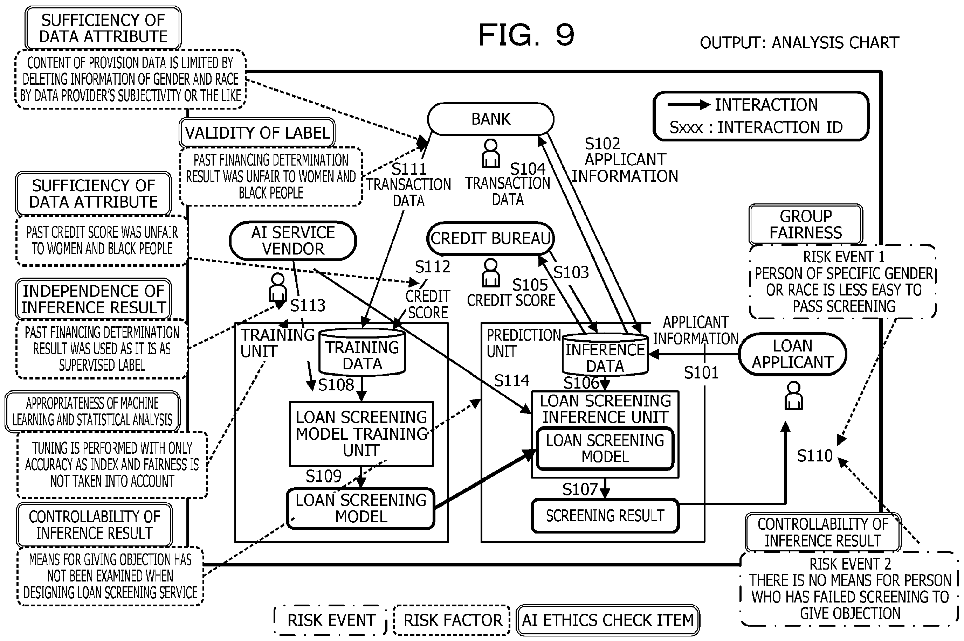

Then, the risk analysis is performed by the user according to the following procedures (1) to (4).
(1) The constituent elements of the AI system 100, data, and relationships among stakeholders are drawn as a system diagram (to be described below with reference to FIG. 7), and interactions are extracted.
(2) Breakdown for each interaction is described in an analysis sheet (to be described below with reference to FIG. 8 (i.e., FIGs. 8A and 8B )).
(3) For each item of the AI ethics checklist, a risk assumed from a state where the corresponding interaction does not satisfy the item is extracted and described in the analysis sheet.
(4) The risks in the analysis sheet are referred to, the same content is organized, and a relationship between an event and a factor is described. For visualization, an analysis diagram (to be described below with reference to FIG. 9) is created by adding the risk event and the factor to the system diagram.

For example, the system diagram, analysis sheet, and analysis diagram are output as output data.

In the above-described risk analysis procedure (3), there are many items in the AI ethics checklist, so the man-hours for verifying the entire checklist are large. For each item of the AI ethics checklist, a task of assuming a risk (a task of a human thinking) occurs from a state where the corresponding interaction does not satisfy the item. Furthermore, it is not always necessary to pay attention to all items, but it may be difficult to determine which items should be paid attention to, depending on the configuration of the AI system 100 and the stakeholders.

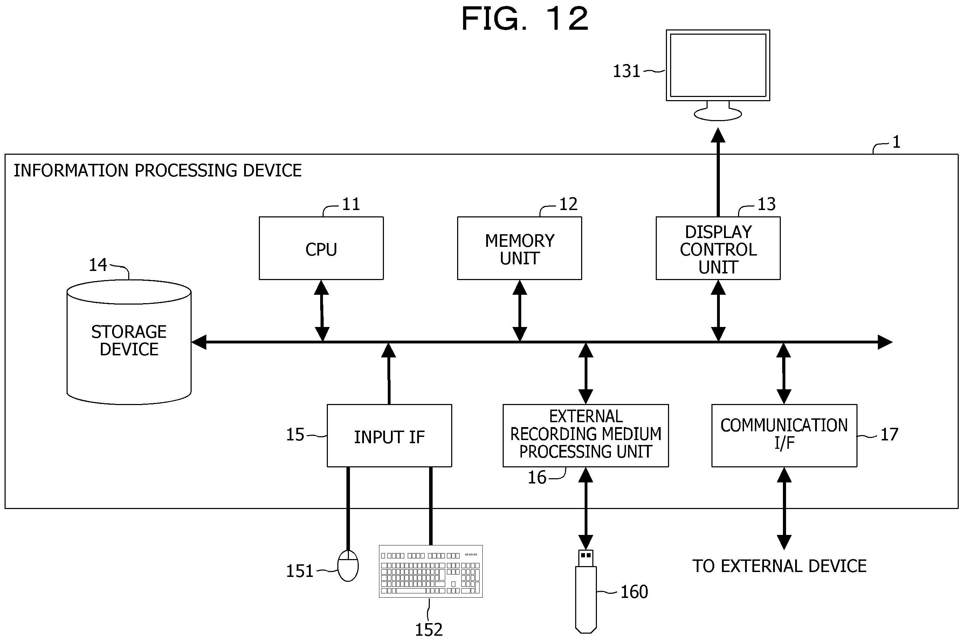

Therefore, for the above-described risk analysis procedure (3), checklist with priority generation processing by an information processing device 1 (to be described below with reference to FIG. 12) is executed.

In the checklist generation processing, the relationships (interactions) between the AI system 100 to be analyzed and the stakeholders are expressed in a graph structure. Then, relationships (interactions) of high importance to ethically pay attention to are extracted on the basis of rules according to characteristics of the graph structure, and the check items for extracting ethical risks associated with the relationship (interaction) of high importance are presented as the checklist with priority.

The information processing device 1 narrows down the checklist. In narrowing down the checklist, characteristics of the "relationship between the configuration of the AI system and the stakeholders" are expressed as the characteristics of the graph structure including a set of interactions.

Since table data of the analysis sheet is in a data format of "interaction set", it is possible to automatically generate the graph structure. For example, the following four characteristics can be automatically extracted as the characteristics of the graph structure.
- The number of nodes of the stakeholders
- The number of stakeholders having a plurality of roles
- The number of stakeholders who are not directly involved with the AI system

The characteristics of the graph structure that are likely to cause ethical risks and the items of the AI ethics checklist that should be suppressed are registered as rules in advance. For example, in a case where there is one or more stakeholders who are not directly involved with the AI system 100, the priority of the interaction involving that stakeholder is increased. This is to grasp indirect effects on the stakeholders that tend to be overlooked in design and development of the AI system 100.

The AI ethics check items to pay attention to are narrowed down on the basis of the rules registered according to the characteristics of the graph structure and are generated as the AI ethics checklist with priority.

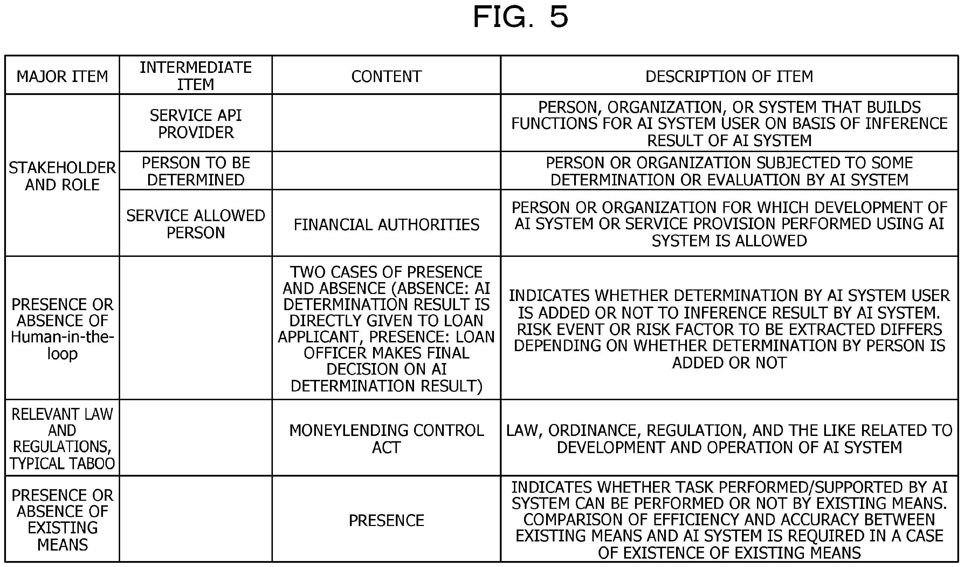

FIGs. 4 to 6 are tables illustrating use cases as input data according to the embodiment.

The use cases illustrated in FIGs. 4 to 6 are input to the AI system 100 as input data in order for a bank to use AI to determine whether to grant a loan to a loan screening applicant.

A use case is associated with a major item, an intermediate item, content, and item description. For example, in FIG. 4 (i.e., FIGs. 4A and 4B), as the intermediate item "AI system provider" in the major item "stakeholders and roles", the content "bank" and the item description "a type of stakeholder, an operation is performed using the developed AI system, and various services are provided" are registered in association with each other.

FIG. 7 is a block diagram illustrating a system diagram as output data according to the embodiment.

The system diagram is output as output data of the AI system 100, and the components of the AI system 100, training data, inference data, stakeholders, and their relationships are described as interactions.

In FIG. 7, "Sxxx" indicates an interaction identifier (ID).

In the example illustrated in FIG. 7, S101 is the interaction of the applicant information input to the inference data 104 from the user 40, and S102 is the interaction of the applicant information input to the inference data 104 from the data provider 30 (bank). S103 is the interaction of the credit score input from the data provider 20 (credit bureau) to the inference data 104, and S104 is the interaction of the transaction data output from the inference data 104 to the data provider 30 (bank). S105 is the interaction of the credit score output from the inference data 104 to the data provider 20 (credit bureau), and S106 is the interaction of the input data from the inference data 104 to the loan screening inference unit 105. S107 is the interaction of the output of the screening result 106 from the loan screening inference unit 105.

S108 is the interaction of the input data from the training data 101 to the loan screening model training unit 102, and S109 is the interaction of the output of the loan screening model 103 from the loan screening model training unit 102.

S111 is the interaction of the transaction data input to the training data 101 from the data provider 30 (bank). S112 is the interaction of the credit score input to the training data 101 from the data provider 20 (credit bureau), and S113 is the interaction of the input data from the AI service provider 10 to the loan screening model training unit 102.

S114 is the interaction of the input data from the AI service provider 10 to the loan screening inference unit 105, and S110 is the interaction of the screening result 106 output to the user 40.

FIG. 8 (i.e., FIGs. 8A and 8B ) is a table illustrating part of an analysis sheet as output data according to the embodiment.

In the analysis sheet, stakeholder and data types, risk, AI ethics check item (AI ethical characteristic), measure, and the like are associated with each interaction ID. For example, the interaction ID "S110" is associated with the stakeholder type "user", the name "loan applicant", and the start/end point "1 (end point)". Furthermore, the interaction ID "S110" is associated with the data type "inference result", the data name "screening result", and the start point/end point "0 (start point)". Moreover, the interaction ID "S110" is associated with the risk (event) "women and black people are less easy to pass screening", the AI ethics check item "group fairness", and the measure "to improve an AI algorithm to cause a difference in ratio of being financeable between genders or racial groups to fall within an allowable range".

FIG. 9 is a block diagram illustrating an analysis diagram as output data according to the embodiment.

In the analysis diagram, the AI ethics check item is displayed in association with each of the interaction IDs displayed in the system diagram illustrated in FIG. 7. Furthermore, each AI ethics check item is displayed in association with either a risk event (see the dashed-dotted frame in FIG. 9) or a risk factor (see the dotted-line frame in FIG. 9).

In the example illustrated in FIG. 9, the AI ethics check item "sufficiency of data attribute" and "validity of label" are displayed in association with S111, and the AI ethics check item "sufficiency of data attribute" is displayed in association with S112. The AI ethics check items "independence of inference result" and "appropriateness of machine learning/statistical analysis" are displayed in association with S113, and the AI ethics check item "controllability of inference result" is displayed in association with S114. The AI ethics check items "group fairness" and "controllability of inference result" are displayed in association with S110.

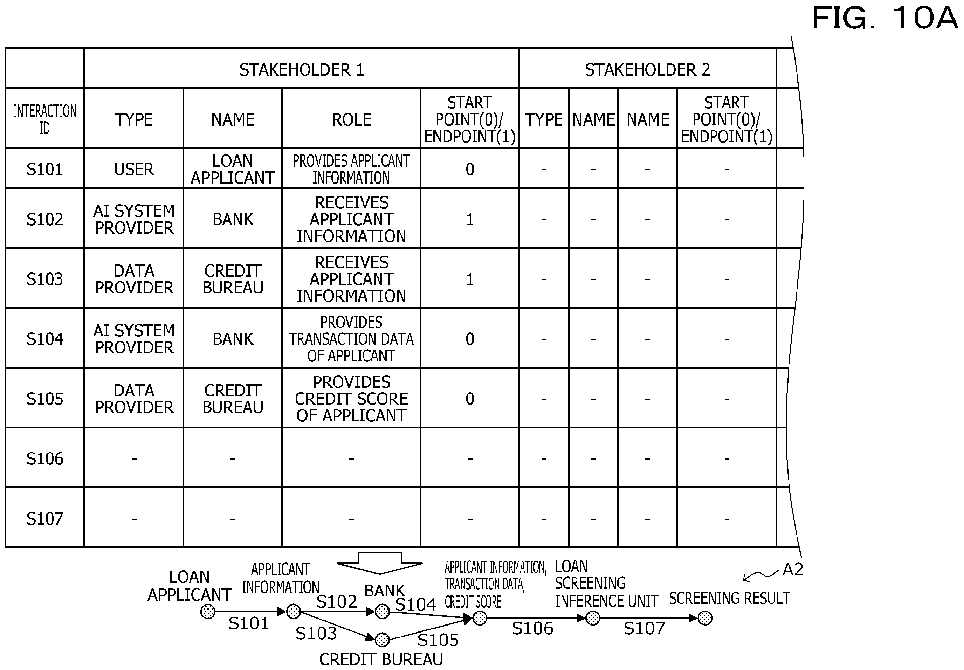

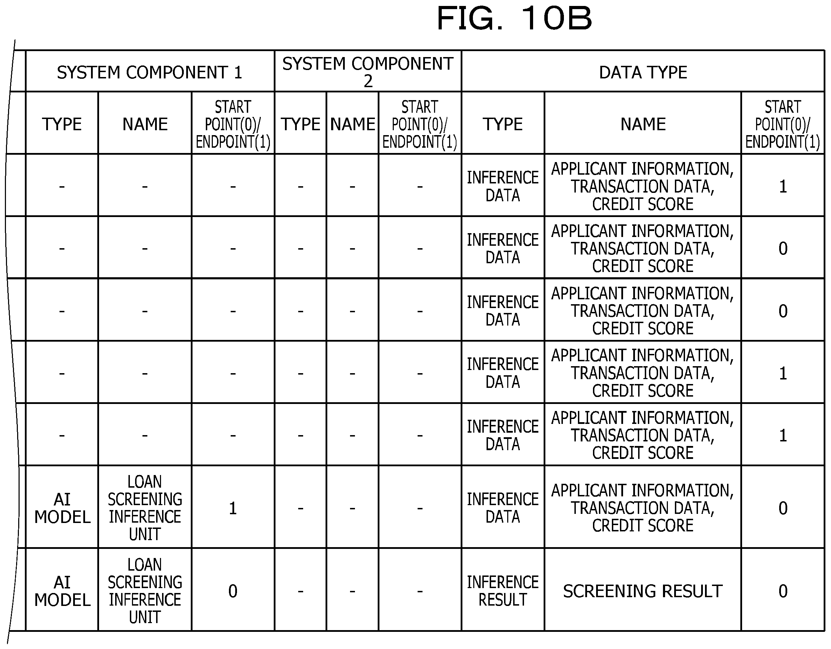

FIG. 10 (i.e., FIGs. 10A and 10B) is a block diagram illustrating a generation example of a graph structure from the analysis sheet according to the embodiment.

The analysis sheet illustrated with code A1 has a table structure similar to the analysis sheet illustrated in FIG. 8. A graph structure as illustrated with code A2 may be generated from the analysis sheet illustrated with code A1.

In the graph structure illustrated with code A2, an arrow between nodes illustrated with circles represents an interaction, and Sxxx attached to each interaction represents an interaction ID.

In the example illustrated with code A2 in FIG. 10, the output of the applicant information from the loan applicant is represented by S101, the input of the applicant information to the bank is represented by S102, and the input of the applicant information to the credit bureau is represented by S103. Furthermore, the output of the applicant information, transaction data, and credit score from the bank is represented by S104, and the output of the applicant information, transaction data, and credit score from the credit bureau is represented by S105. Moreover, the output of the applicant information, transaction data, and credit score to the loan screening inference unit 105 is represented by S106, and the output of the screening result 106 from the loan screening inference unit 105 is represented by S107.

Here, interactions to pay attention to are extracted in the following order of (1) to (3).
(1) The importance of all the interactions is set to 1 point.
(2) The importance of an interaction with a specific characteristic is added (1 point may be added for one characteristic).
(3) The interactions are ranked by importance.

The specific characteristic in (2) above may include a characteristic of nodes at both ends of the interaction (components of the AI system 100, data, or stakeholders) and a characteristic of a connection relationship. The characteristic of nodes at both ends of the interaction may include a stakeholder having a plurality of roles (the AI system provider and the data provider), a stakeholder having a user role, and a stakeholder having a role of a training data provider. The characteristic of a connection relationship may include an interaction of a stakeholder not connected to the output of the AI system 100, and an interaction in which the training data or the inference data is connected to a plurality of data providers.

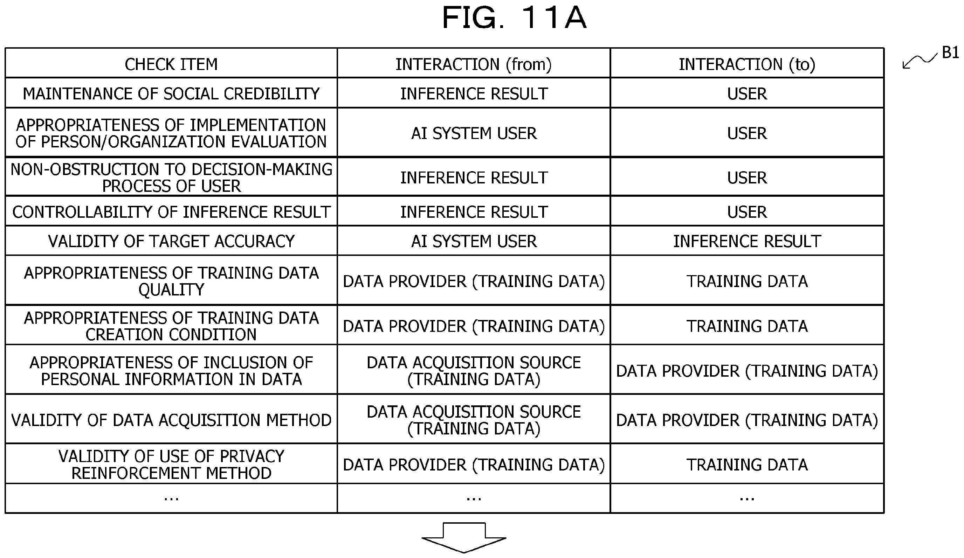

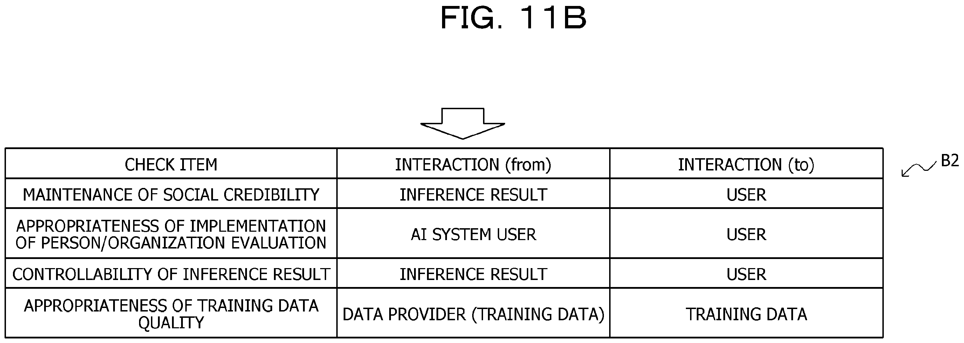

FIG. 11 (i.e., FIGs. 11A and 11B) is a block diagram illustrating an extraction example of check items according to the embodiment.

Corresponding AI ethics check items are listed in descending order of the interaction with the importance score.

In the example illustrated in FIG. 11, among the AI ethics check items illustrated with code B1, four AI ethics check items with high importance scores are extracted and listed as illustrated with code B2.

FIG. 12 is a block diagram schematically illustrating a hardware configuration example of the information processing device 1 according to the embodiment.

As illustrated in FIG. 12, the information processing device 1 includes a central processing unit (CPU) 11, a memory unit 12, a display control unit 13, a storage device 14, an input interface (IF) 15, an external recording medium processing unit 16, and a communication IF 17.

The memory unit 12 is an example of a storage unit and, illustratively, is a read only memory (ROM), a random access memory (RAM), or the like. Programs such as a basic input/output system (BIOS) may be written in the ROM of the memory unit 12. A software program of the memory unit 12 may be appropriately read and executed by the CPU 11. Furthermore, the RAM of the memory unit 12 may be used as a temporary recording memory or a working memory.

The display control unit 13 is connected to a display device 131 and controls the display device 131. The display device 131 is a liquid crystal display, an organic light-emitting diode (OLED) display, a cathode ray tube (CRT), an electronic paper display, or the like and displays various kinds of information for an operator or the like. The display device 131 may be combined with an input device and may be, for example, a touch panel. The display device 131 displays various types of information for the user of the information processing device 1.

The storage device 14 is a storage device having high input/output (IO) performance, and for example, a dynamic random access memory (DRAM), a solid state drive (SSD), a storage class memory (SCM), or a hard disk drive (HDD) may be used.

The input IF 15 may be connected to an input device such as a mouse 151 and a keyboard 152 and may control the input device such as the mouse 151 and the keyboard 152. The mouse 151 and the keyboard 152 are examples of the input devices, and the operator performs various kinds of input operations through these input devices.

The external recording medium processing unit 16 is configured in such a manner that a recording medium 160 is attachable to the external recording medium processing unit 16. The external recording medium processing unit 16 is configured in such a manner that information recorded in the recording medium 160 is allowed to be read in a state in which the recording medium 160 is attached to the external recording medium processing unit 16. In the present example, the recording medium 160 is portable. For example, the recording medium 160 is a flexible disk, an optical disc, a magnetic disk, a magneto-optical disk, a semiconductor memory, or the like.

The communication IF 17 is an interface for enabling communication with an external device.

The CPU 11 is an example of a processor and is a processing device that performs various controls and calculations. The CPU 11 implements various functions by executing an operating system (OS) or a program loaded into the memory unit 12. Note that the CPU 11 may be a multi-processor including a plurality of CPUs, or a multi-core processor having a plurality of CPU cores, or may have a configuration having a plurality of multi-core processors.

A device for controlling operation of the entire information processing device 1 is not limited to the CPU 11 and may be, for example, any one of an MPU, a DSP, an ASIC, a PLD, or an FPGA. Furthermore, the device for controlling operation of the entire information processing device 1 may be a combination of two or more types of the CPU, MPU, DSP, ASIC, PLD, and FPGA. Note that the MPU is an abbreviation for a micro processing unit, the DSP is an abbreviation for a digital signal processor, and the ASIC is an abbreviation for an application specific integrated circuit. Furthermore, the PLD is an abbreviation for a programmable logic device, and the FPGA is an abbreviation for a field-programmable gate array.

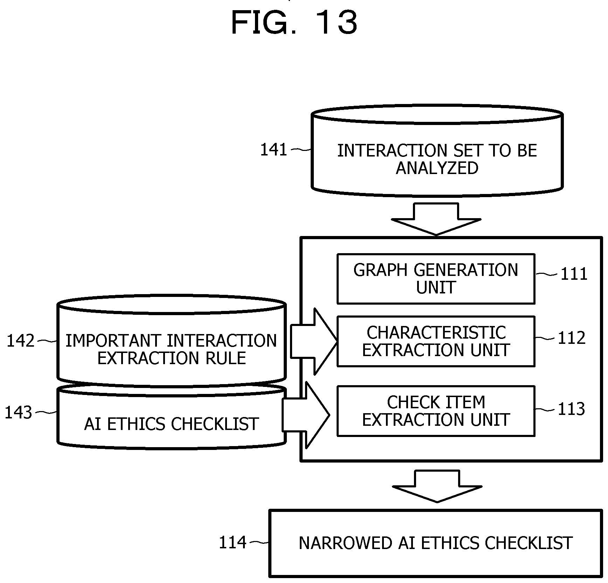

FIG. 13 is a block diagram schematically illustrating a software configuration example of the information processing device 1 according to the embodiment.

The CPU 11 of the information processing device 1 illustrated in FIG. 12 functions as a graph generation unit 111, a characteristic extraction unit 112, and a check item extraction unit 113.

The graph generation unit 111 acquires a plurality of pieces of relational information (for example, interactions) including at least two attributes among an attribute of a type of an object person, an attribute of a type of processing, and an attribute of a type of data, which is determined on the basis of the configuration of the AI system 100. The graph generation unit 111 may acquire relational information on the basis of an interaction set 141 to be analyzed. The graph generation unit 111 may generate the graph structure illustrated in FIG. 10 on the basis of the acquired relational information.

The characteristic extraction unit 112 determines a priority of the plurality of pieces of relational information on the basis of the attribute of the type of the object person. The characteristic extraction unit 112 may determine the priority on the basis of an important interaction extraction rule 142. The characteristic extraction unit 112 may increase the priority of a specific object person related to each of the plurality of pieces of relational information. The characteristic extraction unit 112 may increase the priority of specific relational information among the plurality of pieces of relational information.

The check item extraction unit 113 outputs one or a plurality of check items selected on the basis of the determined priority from among a plurality of check items each associated with each attribute as a narrowed AI ethics checklist 114 of the AI system 100. The check item extraction unit 113 may output a narrowed AI ethics checklist 114 on the basis of an AI ethics checklist 143.

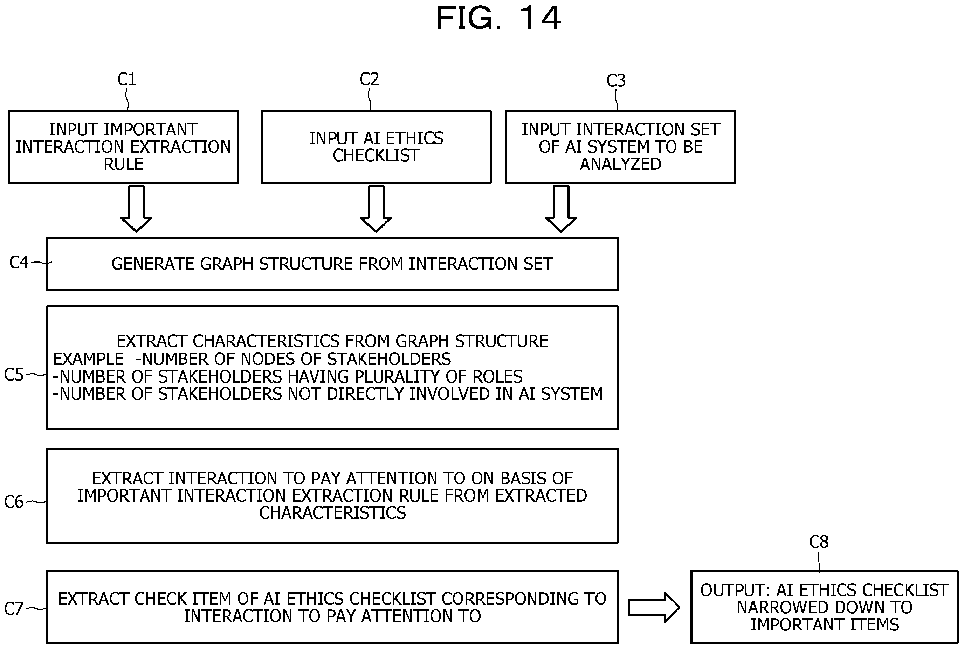

FIG. 14 is a flowchart for describing AI ethics checklist generation processing according to the embodiment.

The graph generation unit 111 receives the important interaction extraction rule 142, the AI ethics checklist 143, and the interaction set 141 to be analyzed as input data (steps C1 to C3).

The graph generation unit 111 generates the graph structure from the interaction set 141 (step C4).

The characteristic extraction unit 112 extracts characteristics from the graph structure (step C5). The extraction of characteristics may be executed on the basis of the number of nodes of the stakeholders, the number of stakeholders having a plurality of roles, and the number of stakeholders not directly involved with the AI system 100, for example.

The characteristic extraction unit 112 extracts an interaction to pay attention to from the extracted characteristics on the basis of the important interaction extraction rule 142 (step C6).

The check item extraction unit 113 extracts the check items of the AI ethics checklist 143 corresponding to the interaction to pay attention to (step C7).

The check item extraction unit 113 outputs the AI ethics checklist 114 narrowed down to important items (step C8). Then, the AI ethics checklist generation processing ends.

### [B] Effects

According to the risk analysis program, the risk analysis method, and the information processing device 1 in the above-described embodiment, the following effects can be obtained, for example.

The graph generation unit 111 acquires a plurality of pieces of relational information (for example, interactions) including at least two attributes among an attribute of a type of an object person, an attribute of a type of processing, and an attribute of a type of data, which is determined on the basis of the configuration of the AI system 100. The characteristic extraction unit 112 determines a priority of the plurality of pieces of relational information on the basis of the attribute of the type of the object person. The check item extraction unit 113 outputs one or a plurality of check items selected on the basis of the determined priority from among a plurality of check items each associated with each attribute as a narrowed AI ethics checklist 114 of the AI system 100.

Therefore, it is possible to support a developer and a provider of the AI system 100 in appropriately recognizing and dealing with ethics risks that may arise from the operation of the AI system 100. Furthermore, the need for the AI service provider 10 and developers to put the ethical characteristics into items to be practiced for components of the AI system 100 and individual stakeholders can be eliminated. Moreover, by prioritizing the checklist of approximately 300 items and preferentially analyzing the top N most important (for example, N = 20) items, critical risks can be recognized early.

### [C] Others

The disclosed technique is not limited to the embodiments described above, and various modifications may be made and carried out without departing from the spirit of the present embodiments. Each configuration and each process of the present embodiments may be selected or omitted as desired, or may be combined as appropriate.

## Claims

1. A risk analysis program for an artificial intelligence (AI) system, the risk analysis program being a program comprising instructions which, when executed by a computer, cause the computer to execute processing, the processing comprising:
acquiring a plurality of pieces of relational information that include at least two attributes among an attribute of a type of an object person, an attribute of a type of processing, and an attribute of a type of data, wherein the relational information is determined on a basis of a configuration of the AI system;
determining a priority of the plurality of pieces of relational information on a basis of the attribute of the type of the object person; and
outputting one or a plurality of check items selected on a basis of the determined priority from among a plurality of check items associated with each attribute as a checklist for the AI system.

2. The risk analysis program according to claim 1, wherein
the determining a priority is executed by increasing the priority of a specific object person related to each of the plurality of pieces of relational information.

3. The risk analysis program according to claim 1 or 2, wherein
the determining a priority is executed by increasing the priority of specific relational information among the plurality of pieces of relational information.

4. A computer-implemented method of risk analysis for an artificial intelligence (AI) system, the method comprising:
acquiring a plurality of pieces of relational information that include at least two attributes among an attribute of a type of an object person, an attribute of a type of processing, and an attribute of a type of data, wherein the relational information is determined on a basis of a configuration of the AI system;
determining a priority of the plurality of pieces of relational information on a basis of the attribute of the type of the object person; and
outputting one or a plurality of check items selected on a basis of the determined priority from among a plurality of check items associated with each attribute as a checklist for the AI system.

5. An information processing apparatus of risk analysis for an artificial intelligence (AI) system, the information processing apparatus comprising:
a processor coupled to the memory, the processor being configured to perform processing including:
acquiring a plurality of pieces of relational information that include at least two attributes among an attribute of a type of an object person, an attribute of a type of processing, and an attribute of a type of data, wherein the relational information is determined on a basis of a configuration of the AI system;
determining a priority of the plurality of pieces of relational information on a basis of the attribute of the type of the object person; and
outputting one or a plurality of check items selected on a basis of the determined priority from among a plurality of check items associated with each attribute as a checklist for the AI system.
